Europäisches Patentamt

European Patent Office

Office européen des brevets

(19)

(11) Publication number: **0 453 698 A1**

(12) **EUROPEAN PATENT APPLICATION**

(21) Application number: 90830593.1

(51) Int. Cl.⁵: **B23K 26/00, B23K 26/06**

(22) Date of filing: 18.12.90

(30) Priority: 13.04.90 IT 6728390

(43) Date of publication of application:
30.10.91 Bulletin 91/44

(84) Designated Contracting States:
BE CH DE ES FR GB IT LI NL SE

(71) Applicant: PRIMA INDUSTRIE S.p.A.
Via San Quintino, 28
I-10121 Torino(IT)

(72) Inventor: Delle Piane, Alberto
Via San Rocco 7/9
I-10090 Bruino (Torino)(IT)
Inventor: Sartorio, Franco
Corso Montevecchio 48
I-10129 Torino(IT)

(74) Representative: Notaro, Giancarlo et al
c/o Jacobacci-Casetta & Perani S.p.A. Via
Alfieri, 17
I-10121 Torino(IT)

(54) A method of laser welding and apparatus for locating and clamping parts to be welded by the method.

(57) A method of forming a laser weld along a discontinuous welding line by means of a welding device comprising means for emitting continuous laser radiation, an optical head (32) for focusing a laser beam from the emission means onto the parts to be welded, and means for moving the optical head (32) relative to the parts (14,16) to be welded along a predetermined working path corresponding to the welding line. The method includes the step of providing a screen (34) which is fixed relative to the parts to be welded (14,16) and extends along the welding line between the optical head (32) and the parts (14,16) to be welded. The screen (34) has a plurality of holes (36) arranged in correspondence with portions of the welding line in which the parts (14,16) are to be welded.

FIG. 1

The present invention relates to a method of forming a laser weld along a discontinuous welding line.

A system for the multiple spot-welding of motor-vehicle bodywork elements is known from French patent application No. 2,549,759, in which the parts to be welded are clamped together by a plurality of clamps with holes which open in the gripping surfaces of the clamps. An optical head fixed to the respective clamp is arranged in each hole. Each optical head receives a laser beam from a source and focuses it onto the parts to be welded through the holes in the clamps.

The main disadvantage of a system of this type is the fact that it is necessary to provide an optical head in correspondence with each welding point. This means that the system is quite complicated, particularly as regards the optical path from the laser source to each focusing head. The flexibility of a system of this type, that is, its ability to operate on parts of different types, is very limited, precisely because of the focusing heads associated with each welding point. Moreover, with a system of this type, it would be extremely difficult to form a discontinuous weld line since a large number of focusing heads would be needed.

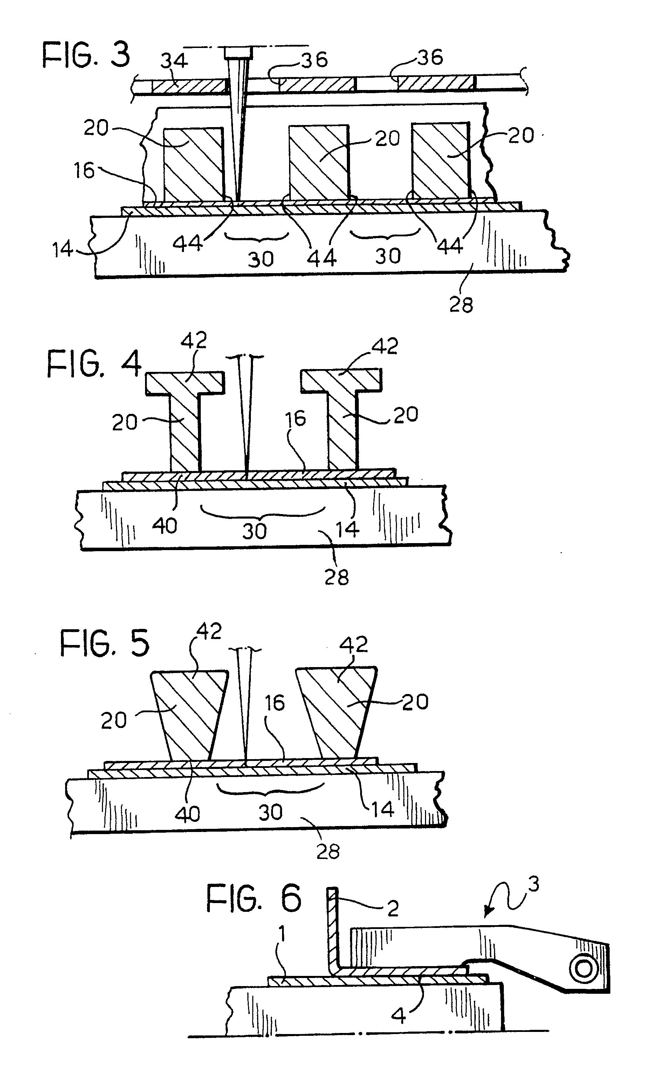

In many practical cases, the parts cannot be joined together by a seam weld and intermittent welding lines must be used. A first example of a case in which it is necessary to form an intermittent weld is when a seam weld would concentrate too much energy in the welding zone whereby the parts would be deformed. In other cases, the choice of the formation of an intermittent weld is dictated by the shapes and sizes of the parts to be welded. By way of example, Figure 6 of the appended drawings will be considered, in which two parts to be welded, indicated 1 and 2, are clamped together by means of a clamp 3. In cases of this type, in order to form the weld in the zone 4, it is necessary to use a clamp with fingers spaced apart along a line perpendicular to the plane of Figure 7. The weld must then be made in the free regions between the fingers of the clamp. Alternatively, as in the aforementioned French patent application No. 2,549,759, the clamps 3 may be formed with holes through which the laser beam is focused onto the parts to be welded.

In cases of this type, it is known to use a welding device with a single focusing head controlled by a control unit which controls its movements along a working path corresponding to a predetermined welding line. In order to achieve a discontinuous line of welding with a device of this type, the solutions used up to now provide for the generation of an intermittent laser beam. This can be achieved by the intermittent activation of the laser source which generates the beam then sent to the focusing head. The intermittent operation of the laser source, however, does not make the best use either of the source or of the optical circuit which transmits the beam from the source to the focusing head. In order to produce an intermittent beam whilst the source is operated continuously, it has also been proposed to use a mechanical device carried by the optical head or arranged at the output of the source to intercept the laser beam according to a predetermined sequence. Both when the source is operated intermittently and when an interception device is used, however, there are considerable problems relating to the synchronisation of the laser beam with the movement of the optical head in order to direct the beam onto the points to be welded.

In order to overcome the aforesaid problems, a subject of the present invention is a method of forming a laser weld along a discontinuous welding line by means of a welding device comprising means for emitting continuous laser radiation, an optical head for focusing a laser beam from the emission means onto the parts to be welded, and means for moving the optical head relative to the parts to be welded along a predetermined working path which corresponds to the welding line, the method being characterised in that it includes the step of providing a screen which is fixed relative to the parts to be welded and extends along the welding line between the optical head and the parts to be welded, the screen having a plurality of holes arranged in correspondence with the portions of the welding line in which the parts are to be welded.

The method according to the invention produces a discontinuous weld whilst the source is operated continuously, without the need for a complex and expensive interception mechanism.

As will become clear from the following description, the present invention results from the observation that the screen interposed between the optical head and the parts to be welded is struck by an unfocused beam which disperses its energy over a fairly large area and hence cannot significantly damage the screen.

According to another aspect, a subject of the present invention is apparatus for locating and clamping parts which are to be welded together by means of a laser welding device comprising means for emitting continuous laser radiation, an optical head for focusing a laser beam from the emission means onto the parts to be welded, and means for moving the optical head relative to the parts to be welded along a predetermined working path corresponding to a welding line, the apparatus including clamping means for clamping together the parts to be welded and intended to act on surface portions of one of the parts to be welded which are situated on the welding line, the apparatus being characterised in that it includes screening means which are fixed relative to the parts to be welded and extend along the welding line between the clamping means and the optical focusing head, the screening means having a plurality of holes arranged in correspondence with portions of the welding line where the clamping means do not act.

Further characteristics and advantages of the present invention will become clear in the course of the detailed description which follows with reference to the appended drawings, provided purely by way of non-limiting example, in which:

Figure 1 is a partial perspective view of apparatus for locating and clamping parts to be welded by a laser device,

Figures 2 and 3 are sections taken on the lines II-II and III-III of Figure 1,

Figures 4 and 5 are sections corresponding to Figure 4, showing a different conformation of the clamping members, and

Figure 6, which has already been described above, is a schematic view taken on the arrow VI of Figure 1.

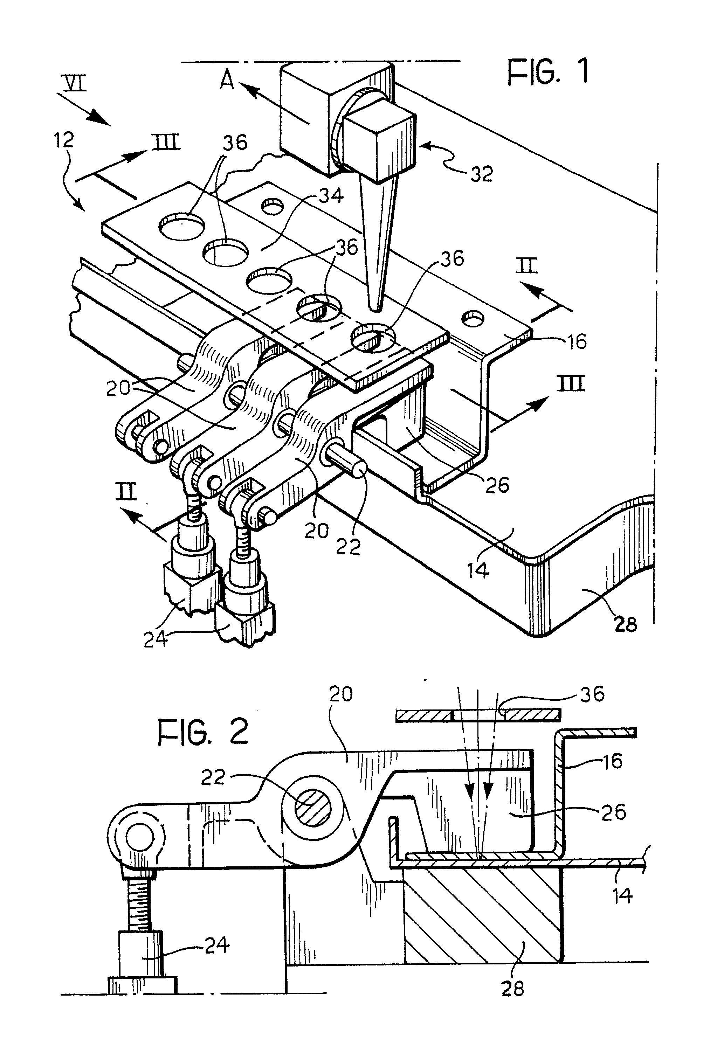

Figure 1 shows a laser welding station including apparatus 12 for locating and clamping the parts to be welded, indicated 14 and 16 in the drawings. In the case shown in the drawings, the part 14 is constituted by a pressed metal sheet, whilst the parts 16 for fixing to the sheet 14 are shaped stiffening and fixing flanges for the sheet 14. The clamping apparatus 12 comprises a plurality of clamping members 20 articulated to a fixed support structure (not shown) about an axis 22 (see also Figures 2 and 3).

In the embodiment illustrated in the drawings, the clamping members 20 are constituted by spaced-apart rocker arms which are operable independently by means of actuators 24. Each clamping member 20 has an active portion 26 which acts on the surface of one of the parts to be welded (in the case under consideration on the part 16) and pushes the parts 14, 16 against a fixed abutment 28.

As can be seen in Figure 3, the parts 14, 16 are to be welded together along portions 30 between two adjacent clamping members 20.

In Figure 1, an optical focusing head, indicated 32, forms part of a laser welding device of known type. The welding device includes a source (not shown) which generates a laser beam which is transmitted by an optical chain to the head 32. The optical head 32 is controlled by a control unit, also of conventional type, and can be moved relative to the apparatus 12 along a predetermined working path. As can be seen in Figure 4, a screen 34 with a plurality of holes 36 arranged in correspondence with the portions 30 between adjacent clamping members 20 is interposed between the clamping members 20 and the optical head 32. The screen 34 is fixed relative to the base structure and is supported thereby in any known manner. In a variant, not shown, the screen may be composed of a plurality of separate sections fixed to the surfaces of the clamping members 20 which face the optical head 32.

In operation, the optical head 32 is supplied with a continuous laser beam and is moved in the direction indicated by the arrows A in Figures 1 and 2, along a working path which corresponds to a welding line on the surface of the part 16. In correspondence with the holes 36, the laser beam from the optical head 32 reaches the surface of the part 16 and welds the parts 14, 16 along the portions 30 between the clamping members 20. In correspondence with the clamping members 20, the laser beam is intercepted by the screen 34. The beam is not focused on the surface of the screen 34 since the screen is spaced from its focal point. The surface of the screen 34 is therefore not damaged significantly by the laser beam. Tests carried out by the Applicant have shown that a screen of normal carbon steel placed a few centimeters from the surface on which the laser beam is focused can withstand the incidence of a beam with a power of 1500-2000 KW.

In the variants shown in Figures 4 and 5, the screen is formed directly by the surfaces of the clamping members 20 which face the optical head 32. In this case, in profile, the gripping surfaces 40 of the clamping members 20 are shorter in the direction of the welding line than their screening surfaces 42. This prevents the edges 44 of the clamping members 20 from being welded to the part 16.

Naturally, the principle of the invention remaining the same, the details of construction and forms of embodiment may be varied widely with respect to those described and illustrated, without thereby departing from the scope of the present invention.

## Claims

1. A method of forming a laser weld along a discontinuous welding line by means of a welding device comprising means for emitting continuous laser radiation, an optical head (32) for focusing a laser beam from the emission means onto the parts (14, 16) to be welded, and means for moving the optical head (32) relative to the parts (14, 16) to be welded along a predetermined working path which corresponds to the welding line, the method being characterised in that it includes the step of providing a screen (34) which is fixed relative to the parts (14, 16) to be welded and extends along the welding line between the optical head (34) and the parts (14, 16) to be welded, the screen (34) having a plurality of holes (36) arranged in correspondence with the portions (30) of the welding line in which the parts (14, 16) are to be welded.

2. Apparatus for locating and clamping parts which are to be welded together by means of a laser welding device comprising means for emitting continuous laser radiation, an optical head (32) for focusing a laser beam from the emission means onto the parts (14, 16) to be welded, and means for moving the optical head (32) relative to the parts to be welded along a predetermined working path corresponding to a welding line, the apparatus including clamping means (20) for clamping together the parts (14, 16) to be welded intended to act on surface portions of one (16) of the parts to be welded which are situated on the welding line, the apparatus being characterised in that it includes screening means (34, 42) which are fixed relative to the parts (14, 16) to be welded and extend along the welding line between the clamping means (20) and the optical focusing head (32), the screening means (34, 42) having a plurality of holes (36) arranged in correspondence with portions (30) of the welding line where the clamping means (20) do not act.

3. Apparatus according to Claim 2, characterised in that the screening means comprise a screen (34) which is spaced from the surface of the part (16) on which the laser beam acts in a direction perpendicular to the direction of the beam.

4. Apparatus according to Claim 2, characterised in that the clamping means (20) include at least one clamping member with a gripping surface (40) which faces the parts (14, 16) to be welded and a screening surface (42) facing the optical focusing head (32).

5. Apparatus according to Claim 4, characterised in that, in a cross-section taken in a plane containing the welding line and the line of incidence of the laser beam, the profile of each clamping member (20) has a gripping surface (40) which is shorter in the direction of the welding line than the screening surface (42).

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 379 219   (THE GILLETTE COMPANY)<br>* the whole document *<br>— — — | 1,2 | B 23 K 26/00<br>B 23 K 26/06 |
| X | US-A-4 847 467   (COLT 7 INC.)<br>* the whole document *<br>— — — | 1,2 | |
| A | DE-A-3 717 960   (MESSER GRIESHEIM G.m.b.H.)<br>* the whole document *<br>— — — | 1-3 | |
| A,D | FR-A-2 549 759   (SCIAKY SA.)<br>* the whole document *<br>— — — — — | 1-3 | |

| | | | TECHNICAL FIELDS SEARCHED (Int. Cl.5) |
|---|---|---|---|
| | | | B 23 K |

The present search report has been drawn up for all claims

| Place of search | Date of completion of search | Examiner |
|---|---|---|
| The Hague | 21 July 91 | ARAN D.D. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

&: member of the same patent family, corresponding
   document